# EUROPEAN PATENT APPLICATION

(11) **EP 4 664 576 A1**
(43) Date of publication of application: **17.12.2025**
(21) Application number: 24894696.4
(22) Date of filing: 22.11.2024
(51) Int. Cl.: H01M 10/04, H01M 10/0585

(54) **ALL-SOLID-STATE BATTERY PRESSING SYSTEM**

(30) Priority: 23.11.2023 KR 20230164806; 21.11.2024 KR 20240167560
(71) Applicant: LG Energy Solution, Ltd., Seoul 07335 (KR)
(72) Inventor: KIM, Na Yoon, Daejeon 34122 (KR); HWANG, Sunwoo, Daejeon 34122 (KR); KIM, Ji Young, Daejeon 34122 (KR); LEE, Daejin, Daejeon 34122 (KR); CHA, Hyohyun, Daejeon 34122 (KR); CHOI, Hyun Bum, Namyangju-si, Gyeonggi-do 12022 (KR)
(74) Representative: Goddar, Heinz J.
(86) International application number: PCT/KR2024/018666
(87) International publication number: WO 2025/110805

(57) **Abstract**

The present invention relates to an all-solid-state battery pressurization system comprising: a jig for pressurizing an all-solid-state battery vertically; and a hydraulic press for applying a uniform pressure to the jig, wherein the uniform pressure is applied to the jig by the pressure applied by the hydraulic press.

## Description

### [Technical Field]

This application claims the benefit of priority to Korean Patent Application No. 10-2023-0164806, filed November 23, 2023, and Korean Patent Application No. 10-2024-0167560, filed November 21, 2024, the disclosures of which are incorporated herein by reference in their entirety.

The present invention relates to an all-solid-state battery pressurization system.

### [Related Art]

A secondary battery is a device that converts external electrical energy into chemical energy, stores it, and generates electricity when needed. It is also called a rechargeable battery because it can be recharged multiple times. Common secondary batteries include lead-acid batteries, nickel-cadmium batteries (NiCd), nickel-metal hydride batteries (NiMH), and lithium secondary batteries. Secondary batteries offer both economic and environmental benefits over primary batteries, which are used once and discarded.

On the other hand, as wireless communication technology becomes increasingly advanced, the demand for lightweight, thin, and miniaturized portable devices and automotive accessories is increasing, and the demand for secondary batteries as energy sources for these devices is growing. In particular, as hybrid and electric vehicles become more practical in terms of preventing environmental pollution, research is emerging to use secondary batteries in these next-generation automotive batteries to reduce manufacturing costs and weight while extending their lifespan. Among the various secondary batteries, lithium secondary batteries have recently been in the spotlight due to their light weight, high energy density and operating potential, and long cycle life.

Generally, lithium secondary batteries are manufactured by mounting an electrode laminate consisting of a negative electrode, a positive electrode, and a separator inside a cylindrical or angular metal can, or a pouch-like case of aluminum laminated sheet, and injecting an electrolyte into the electrode laminate.

Traditionally, the liquid electrolyte in which lithium salts are dissolved in non-aqueous organic solvents has been used for lithium secondary batteries. However, this liquid electrolyte is not only prone to electrode material degradation and volatilization of organic solvents, but also to combustion or explosion due to the increase in ambient temperature and the temperature of the battery itself, and to leakage, making it difficult to realize various types of highly safe lithium secondary batteries.

On the other hand, all-solid-state batteries utilizing a solid electrolyte have the advantage of eliminating organic solvents, which allows for safe and simple electrode laminates.

The all-solid-state batteries can be divided into oxide-based, polymer-based, and sulfide-based batteries according to the raw material of the solid electrolyte. Sulfide-based all-solid-state batteries have attracted attention due to their superior lithium-ion conductivity compared to other types of batteries. However, despite their superior characteristics, they have a higher ionic conductivity and electrical resistance between the positive electrode and negative electrode than liquid batteries, resulting in lower lifespan and output compared to batteries utilizing conventional liquid electrolytes.

On the other hand, secondary batteries are manufactured through the process of assembling cells and activating batteries, where the battery cells are mounted on a charging and discharging device such as a jig and charged and discharged to the conditions required for activation. In this way, the process of performing a predetermined charge and discharge using a jig to activate the battery is called formation.

Since all-solid-state batteries are secondary batteries, they also undergo this charging and discharging process, which requires pressure to be applied to the cells through a jig. Currently, a torque wrench is used to tighten the screws of the jig one by one to pressurize the battery, but this method does not provide uniform pressure on the cell. In addition, as the cell area increases, greater pressure needs to be applied. However, relying solely on a scres-tightening method without press equipment has its limitations.

Therefore, it is necessary to study the pressurization system of all-solid-state batteries that can apply uniform pressure to the entire area of the cell to solve the above problems.

(Patent Reference 1) U.S. Patent Application Publication No. 2023-0028855

### [Detailed Description of the Invention]

### [Technical Problem]

The present invention aims to provide a pressurization system for an all-solid-state battery capable of applying uniform pressure to the entire area of the cell during charging and discharging of the all-solid-state battery.

### [Technical Solution]

To fulfill the above purposes, the present invention provides an all-solid-state battery pressurization system comprising: a jig for pressurizing an all-solid-state battery vertically; and a hydraulic press for applying a uniform pressure to the jig, wherein the uniform pressure is applied to the jig by the pressure applied by the hydraulic press.

In one example of the present invention, the all-solid-state battery pressurization system comprises a plurality of jigs, wherein the plurality of jigs may have different areas in contact with the all-solid-state battery.

In one example of the present invention, each of the plurality of jigs is pressurized by a plurality of hydraulic presses, wherein the plurality of hydraulic presses may be connected via a plurality of hydraulic connecting tubes from a single hydraulic cylinder.

In one example of the present invention, the plurality of jigs comprises a first jig and a second jig, wherein the first jig has an area of 6,000 mm² or less and the second jig has an area of over 6,000 mm².

In one example of the present invention, the first jig may adjust the pressure in units of 0.5 to 3 bar, and the second jig may adjust the pressure in units exceeding 3 bar up to 8 bar.

In one example of the present invention, when the thickness of the all-solid-state battery is reduced by a constant pressure applied to the jig by the pressure applied by the hydraulic press, the pressure may be maintained by tightening the screws of the jig.

In one example of the present invention, the pressure applied to the all-solid-state battery is maintained by tightening the screws of the jig, and then the pressure applied by the hydraulic press is removed.

In one example of the present invention, the pressure applied to the all-solid-state battery is maintained by tightening the screws of the jig, and then the pressure applied by the hydraulic press is removed.

In one example of the present invention, the all-solid-state battery may be a sulfide-based all-solid-state battery.

### [Advantageous Effects]

The pressurization system of the all-solid-state battery of the present invention has the effect of being able to apply uniform pressure to the cell even if the cell area increases, thereby increasing the charge and discharge efficiency of the cell, improving the rate performance of the cell, and improving the charge and discharge cycle of the cell.

### [Brief Description of Drawing]

FIG. 1 is a photograph of a pressurization system for an all-solid-state battery according to the prior art.
FIG. 2 is a schematic diagram illustrating a pressurization system for an all-solid-state battery according to one example of the present invention.
FIG. 3 is a schematic diagram illustrating a pressurization system for an all-solid-state battery according to one example of the present invention.
FIG. 4 is a schematic diagram illustrating a pouch manufactured for pressurizing an all-solid-state battery according to one example of the present invention.
FIG. 5 is a photograph showing the result of a pressurized all-solid-state battery according to a pressurization system of an all-solid-state battery according to one example of the present invention.

### [Best Mode]

Hereinafter, with reference to the accompanying drawings, the present invention will be described in detail so that it can be readily practiced by one having ordinary skill in the art. However, the present invention may be implemented in many different forms and is not limited to the examples described herein.

In order to clearly illustrate the present invention, portions not related to the description have been omitted, and identical or similar components are designated by the same reference numerals in the specification.

In addition, the terms and words used in this specification and claims are not to be construed in their ordinary or dictionary sense, but rather in a sense and concept consistent with the technical idea of the present invention, based on the principle that the inventor may define the concept of a term as he/her sees fit to best describe his/her invention.

Examples will be described in detail below with reference to the accompanying drawings. However, the present invention may be implemented in many different forms and is not limited to the examples described herein.

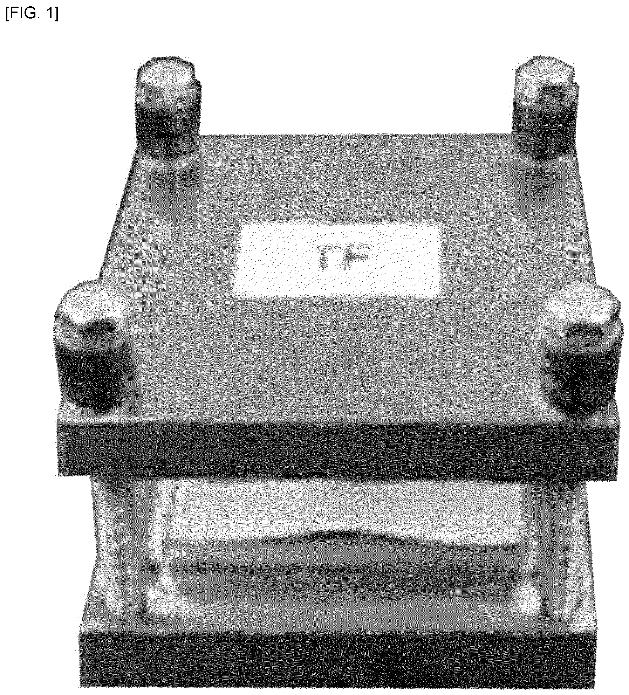

Among conventional all-solid-state batteries, all-solid-state batteries using sulfide-based solid electrolytes as solid electrolytes undergo a charge and discharge process, and during this process, pressure must be applied to the cell through a jig. Conventionally, a method of tightening the screws of the jig one by one using a torque wrench was employed for cell pressurization, as shown in FIG. 1, but this method is not only cumbersome but also has the drawback of failing to apply uniform pressure to the cells. In addition, as the cell area increased, greater pressure needed to be applied, but relying solely on a screw-tightening method without press equipment had its limitations.

Therefore, it is necessary to study the pressurization system of all-solid-state batteries that can apply uniform pressure to the entire area of the cell to solve the above problems.

Accordingly, the inventors of the present invention have found that an all-solid-state battery pressurization system comprising a jig for pressurizing an all-solid-state battery vertically; a hydraulic press for applying uniform pressure to the jig, wherein the uniform pressure is applied to the jig by the pressure applied by the hydraulic press, can solve the above problem, and completed this invention.

The present invention relates to an all-solid-state battery pressurization system, specifically comprising a jig for pressing an all-solid-state battery vertically; and a hydraulic press for applying uniform pressure to the jig.

The all-solid-state battery pressurization system of the present invention can apply a constant pressure to the jig by the pressure applied by the hydraulic press, so that a constant pressure can be applied to the top and bottom of the all-solid-state battery.

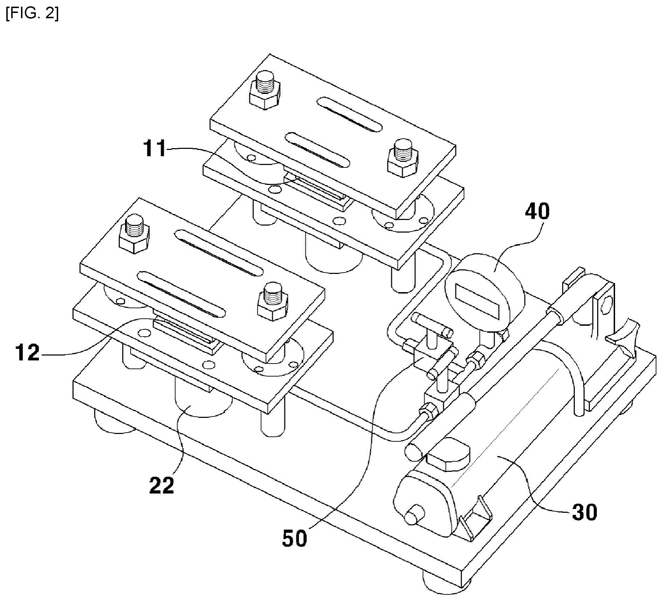

The all-solid-state battery pressurization system of the present invention comprises a plurality of jigs, wherein the plurality of jigs may have different areas in contact with the all-solid-state battery, as shown in FIG. 2. The all-solid-state battery pressurization system of the present invention utilizes a plurality of jigs with different areas, so that the pressure applied to the jigs can be different.

In the all-solid-state battery pressurization system, when the thickness of the all-solid-state battery is reduced by a constant pressure applied to the jig by the pressure applied by the hydraulic press, the pressure may be maintained by tightening the screws of the jig. As the hydraulic press applies pressure to the jig, the screws in the jig are loosened, and by tightening the loosened screws accordingly, the pressure applied by the hydraulic press can be maintained.

In the all-solid-state battery pressurization system of the present invention, the pressure applied to the all-solid-state battery is maintained by tightening the screws of the jig, and then the pressure applied by the hydraulic press is removed. As described earlier, when the screws are tightened, the pressure applied by the hydraulic press may be maintained, in which case the pressure applied to the all-solid-state battery by the jig may be maintained even if the pressure applied by the hydraulic press is removed.

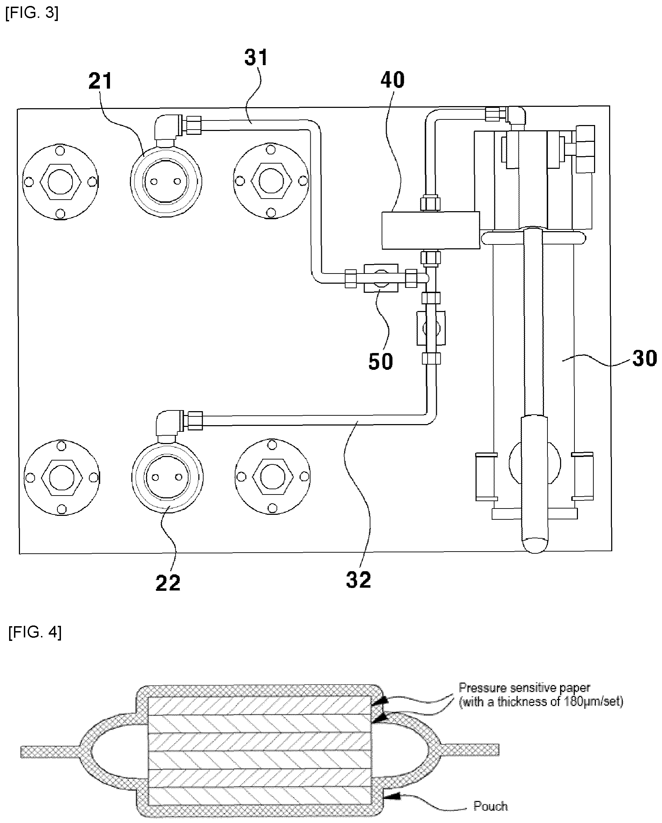

In the present invention, each of the plurality of jigs is pressurized by a plurality of hydraulic presses, and the plurality of hydraulic presses may be connected from a single hydraulic cylinder (30) through a plurality of hydraulic connecting tubes (31, 32), as shown in FIG. 3. For each of the jigs (11, 12), one hydraulic press (21, 22) is arranged, which applies pressure on one side of the jig (11, 12), and thus also applies pressure on the all-solid-state battery. The means for applying pressure to the hydraulic presses (21, 22) is a hydraulic cylinder (30). In the present invention, the hydraulic cylinder (30) applies pressure on a plurality of hydraulic presses (21, 22) via a plurality of hydraulic connectors (31, 32), wherein one hydraulic press (21, 22) is connected to a plurality of hydraulic connectors (31, 32), which in turn are connected to a plurality of hydraulic presses (21, 22), which in turn can apply pressure on a plurality of jigs (11, 12).

In the present invention, there is only one hydraulic cylinder (30), but the pressure applied on it can be varied by varying the area of the jigs (11, 12) connected to it. Each pumping of one hydraulic cylinder (30) causes the cylinder to move a certain amount of travel, which is defined as the travel distance. This way, each pumping has a constant travel distance, and therefore a constant value of pressure can be added. This travel distance will depend on the pressure in the cylinder, for example, if the area of the cylinder is 71.15 cm², the cylinder travels 0.13 mm per pump. In this case, the pressure applied on a jig with an external area of 7cm*7cm will increase by 1 bar for every 1 pump. Similarly, if the area of the cylinder is 33.2 cm², and the cylinder travels 1.1 mm (for 13 bar or less) or 0.28 mm (for 13 bar or more) per pump, the pressure on a jig with an external area of 8 cm*10 cm will increase by 5 bar per pump.

By varying the area (outer width) of the jig, the pressure applied to the jig can be varied. Accordingly, in the present invention, when the plurality of jigs comprises a first jig and a second jig, the first jig can be set to have an area of 6,000 mm² or less and the second jig can be set to have an area of over 6,000 mm².

In this case, the first jig provided in the all-solid-state battery pressurization system of the present invention may adjust the pressure in units of 0.5 to 3 bar, and the second jig may adjust the pressure in units exceeding 3 up to 8 bar.

The pressure can be regulated using a gauge (40), a manual valve (50), and a manual pump (60), and the gauge, valve, and pump can be any of those commonly used in the art.

In the present invention, an all-solid-state battery pressurized by an all-solid-state battery pressurization system may include a positive electrode, a negative electrode, and a solid electrolyte. It may further include a positive electrode lead and a negative electrode lead connected to a positive electrode and a negative electrode, respectively.

An all-solid-state battery may be a pouch-type battery cell in which the positive electrode, negative electrode, and solid electrolyte are embedded in a pouch, and a portion of the positive electrode lead and negative electrode lead are exposed to the outside of the pouch. Pouch-type battery cell can be manufactured by placing a solid electrolyte between the positive electrode and negative electrode, pressurizing it to bond the layers, and then enclosing and sealing the electrode assembly formed by attaching the positive electrode lead and negative electrode lead in a pouch.

However, the structure of the all-solid-state battery pressurized by the all-solid-state battery pressurization system according to one example of the present invention is not limited to this configuration.

The configuration of the positive electrode, negative electrode, solid electrolyte layer, positive electrode lead, negative electrode lead, and pouch included in the all-solid-state battery can be used without any particular restriction as long as it is used in all-solid-state batteries used in the art, but preferably it can be a sulfide-based all-solid-state battery.

In the present invention, the all-solid-state battery may be a sulfide-based all-solid-state battery. Thus, the positive electrode, negative electrode, and solid electrolyte layer included in the all-solid-state battery of the present invention may comprise a sulfide-based solid electrolyte.

The sulfide-based solid electrolyte contains sulfur (S) and exhibits ionic conductivity of a metal belonging to Group 1 or 2 of the periodic table, and it may include a Li-P-S-based glass or a Li-P-S-based glass-ceramic. Non-limiting examples of such sulfide-based solid electrolytes may include Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂S₅, Li₂S-P₂S₅-SiS₂, Li₂S-P₂S₅-SnS, Li₂S-P₂S₅-Al₂S₃, Li₂S-GeS₂, and Li₂S-GeS₂-ZnS, and may include one or more of these electrolytes. However, it is not specifically limited to these examples.

The solid electrolyte layer of the present invention may be prepared from the sulfide-based solid electrolyte. The method of forming a solid electrolyte layer is not particularly limited as long as it is used in the art, and may be, for example, by mixing a solid electrolyte powder with a binder and a solvent to prepare a slurry comprising a sulfide-based solid electrolyte, and then applying the slurry to the current collector formed with an electrode thereon, drying and rolling the slurry. The binder and solvent can be used without particular limitations as long as they are materials that do not react with sulfur in the solid electrolyte.

A positive electrode according to one example of the present invention may include a positive electrode current collector, a positive electrode active material, and a solid electrolyte.

The positive electrode current collector is intended for the support of the positive electrode active material and is not particularly limited as long as it has good conductivity and is electrochemically stable in the voltage range of the lithium secondary battery. For example, the positive electrode current collector may be any metal selected from the group consisting of copper, aluminum, stainless steel, titanium, silver, palladium, nickel, alloys thereof, and combinations thereof, wherein the stainless steel may be surface treated with carbon, nickel, titanium, or silver, and the alloy may preferably be an aluminum-cadmium alloy, but may also be a non-conductive polymer whose surface is treated with calcined carbon or a conductive material, or a conductive polymer.

The positive electrode current collector can form microscopic irregularities on its surface to strengthen the binding force with the positive electrode active material, and various forms can be used, such as films, sheets, foils, meshes, nets, porous bodies, foams, non-woven bodies, etc.

The solid electrolyte included in the positive electrode of the present invention is the same as the solid electrolyte discussed above.

The positive electrode active material may comprise a positive electrode active material and optionally a conductive material and a binder.

The positive electrode active material may vary depending on the type of all-solid-state battery. For example, the positive electrode active material may include, but not limited to, a layered compound such as lithium cobalt oxide (LiCoO₂), or lithium nickel oxide (LiNiO₂), or a compound substituted with one or more transition metals; a lithium manganese oxide such as Li₁₊ₓMn₂₋ₓO₄ (wherein 0<x≤0.33), LiMnO₃, LiMn₂O₃, or LiMnO₂; a lithium copper oxide (Li₂CuO₂); a vanadium oxide, such as LiV₃O₈, V₂O₅, or Cu₂V₂O₇; Ni site-type lithium nickel compound represented by LiNi₁₋ₓMₓO₂ (wherein M is Co, Mn, Al, Cu, Fe, Mg, B or Ga; and 0.01≤x≤0.3); a lithium manganese complex oxide represented by LiMn₂₋ₓMₓO₂ (wherein M is Co, Ni, Fe, Cr, Zn or Ta; and 0.01≤x≤0.1) or Li₂Mn₃MO₈ (wherein M is Fe, Co, Ni, Cu or Zn); a lithium manganese complex oxide with spinel structure, represented by LiNiₓMn₂₋ₓO₄; LiCoPO₄; LiFePO₄; elemental sulfur (S8); a sulfur-based compound such as Li₂Sn (wherein n is 1), an organosulfur compound or a carbon-sulfur polymer ((C₂Sₓ)n, wherein x is 2.5 to 50, and n is 2).

The conductive material is a material that electrically connects the electrolyte and the positive electrode active material and serves as a pathway for electrons to move from the current collector to the positive electrode active material, and can be used without restriction as long as it does not cause chemical changes in the lithium secondary battery and has porosity and conductivity.

For example, porous carbon-based materials can be used as the conductive material, wherein carbon-based material includes carbon black, graphite, graphene, activated carbon, and carbon fiber; and metallic fibers such as metal mesh; metallic powders such as copper, silver, nickel, or aluminum; or organic conductive materials such as polyphenylene derivatives. The conductive materials may be used alone or in combination.

Currently commercially available products as a conductive material include Acetylene Black (from Chevron Chemical Company or Gulf Oil Company), Ketjen Black EC (from Armak Company), Vulcan XC-72 (from Cabot Company), and Super P (from MMM). Examples may include acetylene black, carbon black, and graphite.

Further, the positive electrode may further comprise a binder, wherein the binder further increases the cohesion between the components comprised of the positive electrode, or between the components and the current collector, and any binder known in the art may be used.

For example, the binder may be one or a mixture or copolymer of two or more selected from the group consisting of a fluoroplastic binder comprising polyvinylidenefluoride (PVdF) or polytetrafluoroethylene (PTFE); a rubber-based binder comprising styrene butadiene rubber (SBR), acrylonitrile-butadiene rubber, or styrene-isoprene rubber; a cellulosic binder, including carboxyl methyl cellulose (CMC), starch, hydroxypropyl cellulose, and regenerated cellulose; a polyalcoholic binder; a polyolefin binder, including polyethylene or polypropylene; a polyimide binder; a polyester binder; and a silane binder.

A negative electrode according to one example of the present invention may include a negative electrode current collector, a negative electrode active material, and a solid electrolyte.

The negative electrode, like the positive electrode, may comprise a conductive material and a binder as desired. The negative electrode current collector, conductive material, and binder may be those normally used in a negative electrode, as described above.

The negative electrode active material according to one example of the present invention may be a lithium metal, a lithium alloy, or a negative electrode-free form.

The negative electrode-free form may comprise only a negative electrode current collector, or may be a structure coated with a carbon layer comprising a binder on the negative electrode current collector.

One of ordinary skill in the art relating to the present examples will understand that it can be implemented in modified forms without departing from the essential characteristics described above. Therefore, the disclosed methods should be considered from an illustrative rather than a limiting perspective. The scope of the invention is shown by the claims of the patent and not by the foregoing descriptions, and all differences within the scope thereof are to be construed as incorporated into the present invention.

### [Mode for Practicing the Invention]

Hereinafter, Examples are presented to facilitate an understanding of the present invention. The following Examples are provided to illustrate the present invention, but the present invention is not limited thereto.

### Example

After fabricating a cell with a pressure sensitive paper as shown in FIG. 4, a test was conducted to apply pressure using a hydraulic press as in the present invention.

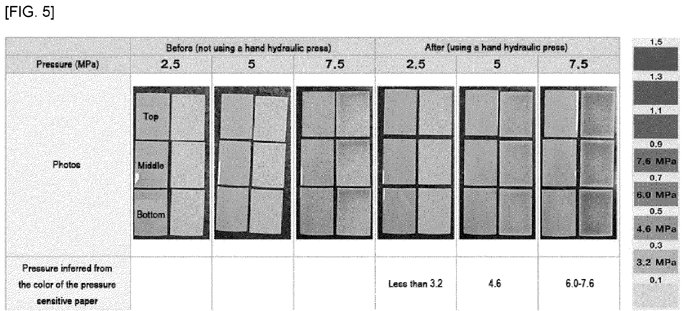

The results are shown in FIG. 5 and it was confirmed that using a hand hydraulic press allows the desired pressure to be applied closely and ensures uniform pressure across the entire cell.

Specifically, as shown in FIG. 2, the hand hydraulic press comprises two jigs (first jig, second jig) and respective cylinders connected to the respective jigs. First, the cylinder connected to the first jig has an area of 71.15 cm², and the travel distance of the cylinder per pump was 0.13 mm, and the area of the cylinder connected to the first jig was 7 cm*7 cm (4,900 mm²), and the pressure applied to the first jig was increased by 1 bar per pump. Similarly, the cylinder connected to the second jig has an area of 33.2 cm², and the travel distance of the cylinder per pump is 1.1 mm, and the area of the cylinder connected to the second jig is 8 cm*10 cm (8,000 mm²), the pressure applied to the second jig was increased by 5 bar per pump.

In this way, the plurality of hydraulic presses of the all-solid-state battery pressurization system of the present invention are connected through a plurality of hydraulic connecting tubes from a single hydraulic cylinder, so that the plurality of hydraulic presses applying different pressures can be operated by simply adjusting the single hydraulic cylinder.

After pressurizing the all-solid-state battery, it was found that the same pressure was applied in the thickness direction of the cell by the pressure sensitive paper on the top, middle, and bottom, which is shown in FIG. 5.

From this, it can be seen that the all-solid-state battery pressurization system of the present invention can apply a uniform pressure to the cell even if the cell area becomes larger, which has the effect of increasing the charge and discharge efficiency of the cell, improving the rate performance of the cell, and improving the charge and discharge cycle of the cell.

### [Reference Numerals]

- 11:: Jig
- 12:: Jig
- 21:: Hydraulic press
- 22:: Hydraulic press
- 30:: Hydraulic cylinder
- 31:: Hydraulic connecting tube
- 32:: Hydraulic connecting tube
- 40:: Gauge
- 50:: Manual valve
- 60:: Manual pump

## Claims

1. An all-solid-state battery pressurization system comprising
a jig which pressurizes an all-solid-state battery vertically; and
a hydraulic press for applying uniform pressure to the jig;
wherein the uniform pressure is applied to the jig by the pressure applied by the hydraulic press.

2. The all-solid-state battery pressurization system according to claim 1,
comprising a plurality of the jigs,
wherein the plurality of jigs have different areas in contact with the all-solid-state battery.

3. The all-solid-state battery pressurization system according to claim 2,
wherein each of the plurality of jigs is pressurized by a plurality of hydraulic presses, wherein the plurality of hydraulic presses are connected via a plurality of hydraulic connecting tubes from a single hydraulic cylinder.

4. The all-solid-state battery pressurization system according to claim 3,
wherein the plurality of jigs include a first jig and a second jig,
the area of the first jig is 6,000 mm² or less, and
the area of the second jig is over 6,000 mm².

5. The all-solid-state battery pressurization system according to claim 4,
wherein the first jig adjusts the pressure in units of 0.5 to 3 bar, and the second jig adjusts the pressure in units exceeding 3 bar up to 8 bar.

6. The all-solid-state battery pressurization system according to claim 1,
wherein, when the thickness of the all-solid-state battery is reduced by a constant pressure applied to the jig by the pressure applied by the hydraulic press,
the pressure is maintained by tightening the screws of the jig.

7. The all-solid-state battery pressurization system according to claim 6,
wherein the pressure applied to the all-solid-state battery is maintained by tightening the screws of the jig,
and then the pressure applied by the hydraulic press is removed.

8. The all-solid-state battery pressurization system according to claim 1,
wherein the all-solid-state battery is a sulfide-based all-solid-state battery.
